# EUROPEAN PATENT APPLICATION

(11) **EP 2 713 554 A1**
(43) Date of publication of application: **02.04.2014**
(21) Application number: 11866390.5
(22) Date of filing: 28.06.2011
(51) Int. Cl.: H04L 12/24

(54) **METHOD, USER EQUIPMENT AND BASE STATION FOR CONTROLLING UPLINK APPLICATION LAYER SERVICE**

(71) Applicant: Huawei Technologies Co., Ltd., Shenzhen, Guangdong 518129 (CN)
(72) Inventor: LEI, Lingyun, Shenzhen Guangdong 518129 (CN); GUO, Junxiang, Shenzhen Guangdong 518129 (CN); YU, Gang, Shenzhen Guangdong 518129 (CN)
(74) Representative: Haley, Stephen
(86) International application number: PCT/CN2011/076490
(87) International publication number: WO 2012/159302

(57) **Abstract**

The present invention provides a method, a user equipment, and a base station for controlling an uplink application layer service. The method includes: obtaining, by a user equipment, scheduling information of an uplink application layer service stream to be scheduled, where the scheduling information includes service priority information, where the service priority information corresponds to the uplink application layer service stream, or the service priority information corresponds to a service type of the uplink application layer service stream; and preferentially scheduling, by the user equipment, an uplink application layer service stream with a high service priority according to the service priority information. The embodiments of the present invention implement control over application layer service streams.

## Description

### TECHNICAL FIELD

The present invention relates to the field of communications technologies, and in particular, to a method, a user equipment, and a base station for controlling an uplink application layer service.

### BACKGROUND

In an IP-based wireless mobile communications system, operations of each type of specific service at the application layer needs to be supported by a radio access layer, and an application layer service is borne on a communications link at the access layer. The radio access layer is responsible for establishing and maintaining wireless communications links, where a total capacity of the links is limited because it does not exceed a capacity that can be provided by a physical radio device. However, the application layer lacks an effective mechanism to control how services consume the wireless communications link capacity. In other words, the application layer does not actively control its own consumption of radio communications link resources, but is greedy. When this conflict is escalated, application layer services swallow radio network bandwidth without limit, resulting in declined service experience of some users. For example, the application layer of a knockoff mobile phone may greedily use radio network resources regardless of constraints of protocols, to pursue maximum commercial interests. For another example, a BitTorrent (BT)-type service may generate a large number of point-to-point connections, and each connection may maintain a high data throughput rate. Therefore, other interactive services, for example, web page browsing, in a same radio cell may suffer from phenomena such as slow web page loading and even no Internet access. The reason is that the browsing service cannot obtain sufficient radio bandwidth to maintain good quality of service (Quality of Service, QoS).

In a radio network, because actions on downlink application layer services are controlled by functions of a network side device, it is relatively easy for an operator to perform control. However, initiative of actions on uplink application layer services is primarily controlled by a user equipment (User Equipment, UE), and it is difficult for a network side device to control uplink application layer services, and therefore some uplink application layer services may greedily occupy network resources. The downlink herein refers to a direction from a network side device to a user equipment, and the uplink refers to a direction from a user equipment to a network side device. For example, the amount of data of uplink application layer services of a UE is a sum of BT traffic and Hypertext Transfer Protocol (HyperText Transfer Protocol, HTTP) traffic. If the UE always preferentially schedules BT traffic, HTTP may get no transmission chance in a long time, which causes a low Internet access speed. For another example, for two UEs in a same radio cell, UE1 and UE2, if UE1 undergoes a BT service, and UE2 undergoes an HTTP service, it is highly possible that UE2 has bad Internet access experience.

Patent application No. CN102036391A discloses an uplink MU-MIMO transmission method and base station based on a terminal service level. The method includes: determining, by a base station, a terminal service level and/or a time delay requirement of a service to be transmitted of a terminal; according to the service level and/or time delay requirement, allocating to the terminal a data stream index selected from a data stream index sequence; and decoding the data stream that is sent by the terminal according to the data stream index and bears the service of the terminal.

Patent application No. WO/2002/003623A1 discloses a communications interface between an end-user end-user and a network edge node edge node. The interface establishes, prior to data transmission, a differentiated services code point (Differentiated Service Code Points, DSCP) supported by a network. The end-user first sends a service request message to the network edge node. The network edge node responds with a response message carrying the DSCP supported by the network. During data communication, the end-user may decide how to label a packet according to the DSCP supported by the network.

### SUMMARY

Embodiments of the present invention provide a method, a user equipment, and a base station for controlling an uplink application layer service, which implement control over application layer services by using a UE.

According to one aspect, an embodiment of the present invention provides a method for controlling an uplink application layer service, including:
obtaining, by a user equipment, scheduling information of an uplink application layer service stream to be scheduled, where the scheduling information includes service priority information, where the service priority information corresponds to the uplink application layer service stream, or the service priority information corresponds to a service type of the uplink application layer service stream; and
preferentially scheduling, by the user equipment, an uplink application layer service stream with a high service priority according to the service priority information.

According to another aspect, an embodiment of the present invention provides a user side processor, including:
an obtaining module, configured to obtain scheduling information of an uplink application layer service stream to be scheduled, where the scheduling information includes service priority information, where the service priority information corresponds to the uplink application layer service stream, or the service priority information corresponds to a service type of the uplink application layer service stream; and
a scheduling module, configured to preferentially schedule an uplink application layer service stream with a high service priority according to the service priority information obtained by the obtaining module.

According to another aspect, an embodiment of the present invention provides a user equipment, including:
the user side processor, and
at least one of the following modules: a user interface module, an input/output port, and a memory.

According to another aspect, an embodiment of the present invention provides a method for controlling an uplink application layer service, including:
generating, by a base station, scheduling information of an uplink application layer service stream of a user equipment, where the scheduling information includes service priority information, where the service priority information corresponds to the uplink application layer service stream, or the service priority information corresponds to a service type of the uplink application layer service stream; and
sending, by the base station, the scheduling information to the user equipment, so that the user equipment preferentially schedules an uplink application layer service stream with a high service priority according to the scheduling information.

According to another aspect, an embodiment of the present invention provides a base station side processor, including:
a generating module, configured to generate scheduling information of an uplink application layer service stream of a user equipment, where the scheduling information includes service priority information, where the service priority information corresponds to the uplink application layer service stream, or the service priority information corresponds to a service type of the uplink application layer service stream; and
a sending module, configured to send the scheduling information to the user equipment, so that the user equipment preferentially schedules an uplink application layer service stream with a high service priority according to the scheduling information.

According to another aspect, an embodiment of the present invention provides a base station, including:
the base station side processor, and
at least one of the following modules: an input/output port and a memory.

According to another aspect, an embodiment of the present invention provides a processor, used in a user equipment, where the processor reads and runs a program, so that method steps on a user equipment side in the foregoing methods are executed.

According to another aspect, an embodiment of the present invention provides a processor, used in a network side device, where the processor reads and runs a program, so that method steps on a network side device side in the foregoing methods are executed.

According to another aspect, an embodiment of the present invention provides a user equipment, including the processor, a storage device, a screen, and an input/output port, where the processor reads and runs a program, so that method steps on a user equipment side in the foregoing methods are executed.

According to another aspect, an embodiment of the present invention provides a network side device, including a processor, a storage device, an input/output port, and a power amplifier, where the processor reads and runs a program, so that method steps on a network side device side in the foregoing methods are executed.

According to another aspect, an embodiment of the present invention provides a communications system, including the user equipment and the network side device.

It can be known from the foregoing technical solutions that, in the embodiments of the present invention, a user equipment obtains scheduling information of an uplink application layer service stream, and schedules the uplink application layer service stream according to the scheduling information, thereby implementing control over the uplink application layer service stream.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic flowchart of a method according to a first embodiment of the present invention;
FIG. 2 is a schematic diagram of a radio interface protocol stack according to an embodiment of the present invention;
FIG. 3 is a schematic flowchart of a method according to a second embodiment of the present invention;
FIG. 4 is a first schematic diagram of a network device notifying a UE of USCI according to the second embodiment of the present invention;
FIG. 5 is a second schematic diagram of a network device notifying a UE of USCI according to the second embodiment of the present invention;
FIG. 6 is a schematic flowchart of a method according to a third embodiment of the present invention;
FIG. 7 is a schematic structural diagram of a user side processor according to a fourth embodiment of the present invention;
FIG. 8 is a schematic structural diagram of a user equipment according to a fifth embodiment of the present invention;
FIG. 9 is a schematic flowchart of a method according to a sixth embodiment of the present invention;
FIG. 10 is a schematic structural diagram of a base station side processor according to a seventh embodiment of the present invention; and
FIG. 11 is a schematic structural diagram of a base station according to an eighth embodiment of the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

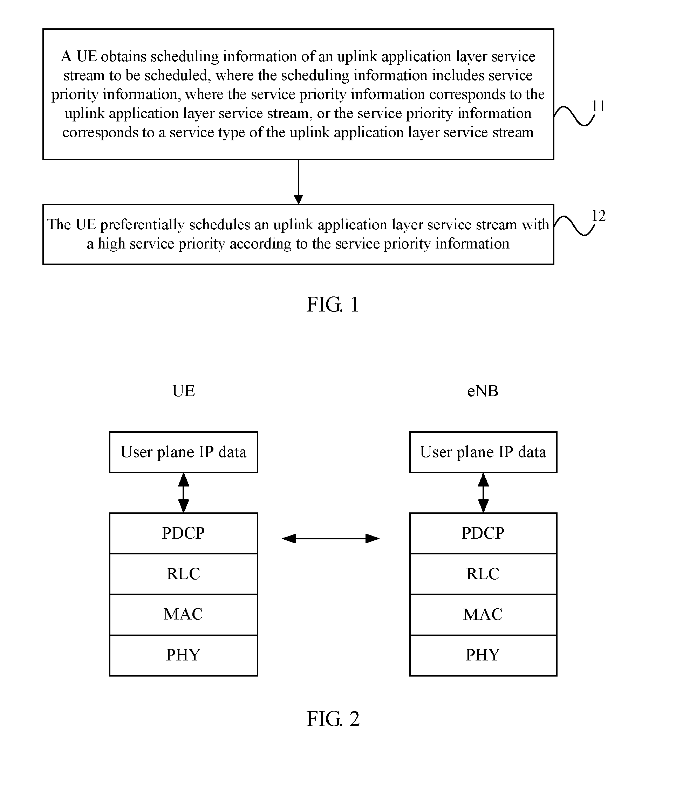

FIG. 1 is a schematic flowchart of a method according to a first embodiment of the present invention, which includes the following steps.

Step 11: A UE obtains scheduling information of an uplink application layer service stream to be scheduled, where the scheduling information includes service priority information, where the service priority information corresponds to the uplink application layer service stream, or the service priority information corresponds to a service type of the uplink application layer service stream.

Specifically, the radio application layer of a UE may include multiple service streams, and a service type of each service stream is determined after each service stream is established. Different service streams may have different service types. In order to implement control over different service streams, specific service types may be acquired, and the control is performed according to service priorities of the specific service types. Certainly, the service priorities may also correspond to the service streams and different service streams adopt different service priorities, and then the control is performed according to the service priorities corresponding to the service streams. Alternatively, service priority information corresponding to a service stream or a service type may be acquired directly, and the control is performed according to the service priority information without learning the specific service stream or service type.

For example, the UE has two service streams, which are respectively S1 and S2, where the S1 stream is an HTTP stream and the S2 stream is a BT stream. In addition, it is assumed that a priority of S1 is 0 and a priority of S2 is 47. In this embodiment of the present invention, it may be only necessary to acquire that the priority corresponding to S1 is 0 and that the priority corresponding to S2 is 47, but it is unnecessary to acquire that S1=[HTTP, 0] and S2=[BT, 47]. In this embodiment, an integer greater than or equal to zero is used to indicate the service priority information.

In another embodiment, the uplink application layer service stream is an IP service stream. An IP service stream can be uniquely identified by using an IP quintuple, where different quintuples correspond to different stream IDs. Therefore, if the UE has m service streams concurrently, a network side needs to deliver scheduling information similar to that shown in Table 1, which gives an example of a mapping relationship between application layer service stream identities and service priorities.

**Table 1**

| Identity information of an application layer service stream | Quintuple (corresponding to stream ID1) | Quintuple (corresponding to stream ID2) | ... | Quintuple (corresponding to stream ID3) |
|---|---|---|---|---|
| Service priority | 1 | 0 | ... | 8 |

In addition, in addition to the service priority information, the scheduling information may further include service control policy information, as shown in Table 2. Table 2 provides an example of a mapping relationship between application layer service streams, service priorities, and service control policies. As the service priority may also be considered as a service control policy in a sense, in order to show the difference, Table 2 uses an expression of "other policy" to describe other service control policy information except the service priority. Specific functions of the other service control policies may be further defined by an operator according to actual requirements of network device applications.

**Table 2**

| Identity information of an application layer service stream | Quintuple (corresponding to stream ID1) | Quintuple (corresponding to stream ID2) | ... | Quintuple (corresponding to stream ID3) |
|---|---|---|---|---|
| Service priority | 1 | 0 | | 8 |
| Other policy 1 | 2 | 4 | | 2 |
| Other policy 2 | 1 | 3 | ... | 62 |
| Other policy x | ... | ... | | ... |

A value range of the service priorities may be 0-N. A larger priority value indicates a higher service priority. Certainly, it may also be defined that, a smaller priority value indicates a higher service priority.

A value range of the other policies may also be 0-N, and specific meanings may be determined by an operator according to requirements of network device applications. For example, policy 1 may be defined as that: a base station specifies a blacklist (0) and a whitelist (1) for the UE, and the UE allows whitelist services to pass and blocks all blacklist services. For another example, policy 2 may be defined as that: a base station specifies, for the UE, quantities of available tokens for different service streams, which are used for uplink scheduling of the UE. For yet another example, policy 3 may be defined as that: a base station specifies, for the UE, comprehensive information (0-N) about pass permits for different service streams and time periods when the service streams are allowed to pass. Design of the policies is flexible, and is not enumerated one by one herein.

Step 12: The UE preferentially schedules an uplink application layer service stream with a high service priority according to the service priority information.

For example, referring to Table 1, the UE first schedules a service stream of stream ID3, ..., and schedules a service stream of stream ID1, and then schedules a service stream of stream ID2.

In this embodiment, a UE obtains scheduling information of an uplink application layer service stream, and schedules the uplink application layer service stream according to the scheduling information, thereby implementing control over the uplink application layer service stream.

FIG. 2 is a schematic diagram of a radio interface protocol stack according to an embodiment of the present invention. The radio interface herein refers to an interface between a UE and an eNB. In an IP-based radio communications system, an application layer IP packet is borne over an access layer protocol stack. Refer to FIG. 2. Using the radio interface of LTE as an example, the application layer IP packet, that is, a user plane IP packet (user plane data), is borne over an access layer link that consists of a Packet Data Convergence Protocol (Packet Data Convergence Protocol, PDCP)-Radio Link Control (Radio Link Control, RLC)-Media Access Control (Media Access Control, MAC) protocol stack. The PDCP, RLC, and MAC protocol stack may be collectively referred to as an access layer protocol stack. The application layer normally does not actively control its own consumption of link resources, and even greedily occupies resources. Therefore, in the embodiment of the present invention, the access layer is used to control application layer service streams. In order to implement the control, the access layer needs to acquire service priority information of an application layer service stream to be scheduled currently. The service priority information may be carried by a message that is delivered by a network side device specifically to a single UE, or may also be carried by a broadcast message that is delivered by the network side device to multiple specific or non-specific UEs. In a word, the service priority information may be carried by a message that is sent by the network side device to the UE. Refer to the following embodiment for details.

The network side device in the embodiments of the present invention may specifically be a base station or a network side device basically equivalent to a base station in an LTE communications system, or may also be a base station or a network side device basically equivalent to a base station in other communications systems, such as a Global System for Mobile Communications (Global System for Mobile communications, GSM), or Universal Mobile Telecommunications System (Universal Mobile Telecommunications System, UMTS), or Worldwide Interoperability for Microwave Access (Woeldwide Interoperability for Microwave Access, WiMAX), or Code Division Multiple Access (Code Division Multiple Access, CDMA) system.

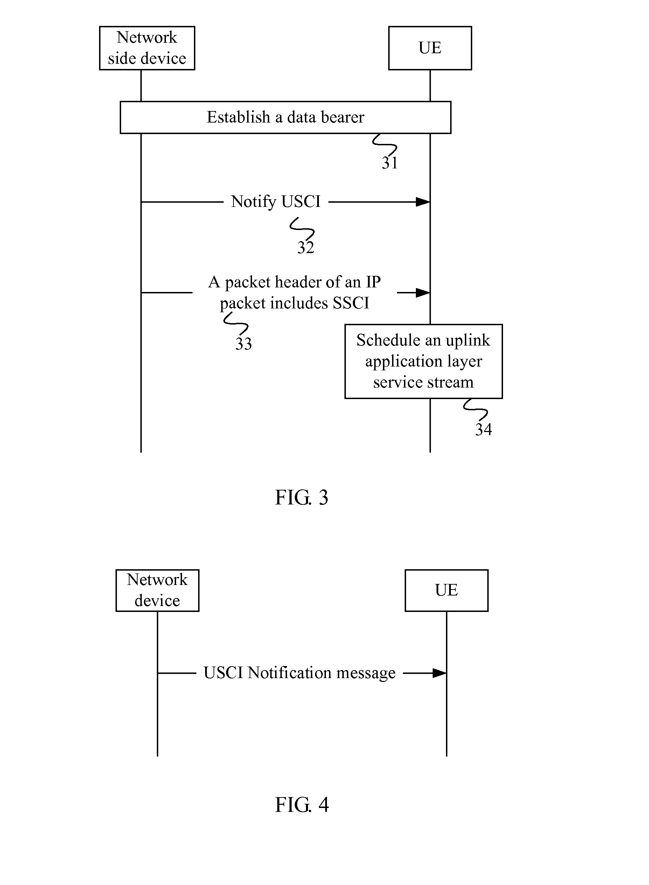

FIG. 3 is a schematic flowchart of a method according to a second embodiment of the present invention. In this embodiment, the following is used as an example: a message sent by a network side device specifically to a single UE carries service priority information. Refer to FIG. 3. This embodiment includes the following steps.

Step 31: A network side device establishes a data bearer with a UE.

Step 32: The network side device notifies the UE of uplink control information (Uplink Stream Control Information, USCI), where the USCI includes scheduling information of an uplink application layer service stream.

In one embodiment, the scheduling information may include stream scheduling control information (Stream Scheduling Control Information, SSCI), service priority information, and a mapping relationship between the SSCI and the service priority information.

In another embodiment, if the mapping relationship between the SSCI and the service priority information is already stored in the UE, the scheduling information may include stream scheduling control information (Stream Scheduling Control Information, SSCI).

In this embodiment, the scheduling information may further include other service control policies. As the service priority is a service control policy in a sense, in order to show the difference, an expression of "other service control policies" is used to describe other service control policy information except the service priority. Specific functions of the other service control policies may be further defined by an operator according to actual requirements of network device applications.

That the network side device notifies the UE of USCI may be that the network side device sends a radio resource control (Radio Resource Control, RRC) message to the UE, where the RRC message carries the USCI. After receiving the RRC message, the UE may send or not send feedback to the network side device.

For example, FIG. 4 is a first schematic diagram of the network side device notifying the UE of USCI according to the second embodiment of the present invention, and in this manner, the UE does not send feedback. Specifically, referring to FIG. 4, the network side device sends a USCI Notification (Notification) message to the UE, where the USCI Notification message carries the USCI.

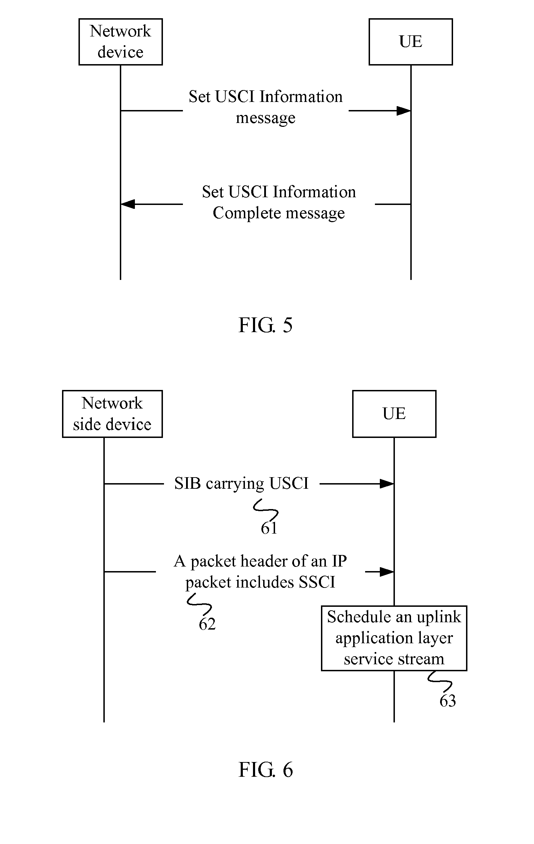

For another example, FIG. 5 is a second schematic diagram of the network side device notifying the UE of USCI according to the second embodiment of the present invention, and in this manner, the UE sends feedback. Specifically, referring to FIG. 5, the network side device sends a Set USCI Information (Set USCI Information) message to the UE, where the Set USCI Information message carries the USCI. After receiving the Set USCI Information message, the UE feeds back a Set USCI Information Complete (Set USCI Information Complete) message to the network side device.

In addition, because a quantity of application layer service streams corresponding to the UE is large, if a manner that each service stream corresponds to one priority is adopted, multiple resource overheads are required. In order to reduce the overheads, application layer service streams may be categorized, where service streams of different categories correspond to different service priority information, and service streams of a same category have the same service priority information. The different categories of application layer service streams may be identified by SSCI. For example, a BitTorrent service and a Thunder service may be grouped into one category, and it is assumed that SSCI=2; and an HTTP service and an MMS service may be grouped into one category, and it is assumed that SSCI=8.

Further, the service priority information may be a stream scheduling weight (Stream Scheduling Weight, SSW), or may also be an uplink scheduling priority (Uplink Scheduling Priority, USP), where larger SSW and the USP values indicate higher priorities. Mapping relationships between the SSCI carried by the USCI in the embodiment and the service priority information (SSW or USP) may be shown in Table 3 and Table 4 respectively.

**Table 3**

| | | | | |
|---|---|---|---|---|
| SSCI (0-63) | 2 | 5 | ...... | 19 |
| SSCI (0-63) | 1 | 0 | ...... | 8 |

**Table 4**

| | | | | |
|---|---|---|---|---|
| SSCI (0-63) | 2 | 5 | ...... | 19 |
| USP (0-100) | 7 | 68 | ...... | 22 |

Step 33: The network side device sends an IP packet to the UE, where a packet header of the IP packet includes SSCI information of the uplink application layer service stream that is to be scheduled and of the user equipment.

Because the access layer is not clear about a service type of the application layer service stream to be scheduled, and is not clear about the corresponding SSCI either, it is necessary for the network side device to notify the UE of the SSCI of the application layer service stream to be scheduled.

In multiple embodiments of the present invention, generally, there is a one-to-one correspondence between uplink application layer service streams and downlink application layer service streams. Therefore, the SSCI may be carried in a downlink application layer service stream. On this basis, after receiving the SSCI carried by the downlink application layer service stream, the UE may determine SSCI of an uplink application layer service stream corresponding to the downlink application layer service stream. The determining manner may be: the SSCI of the downlink application layer service stream is obtained and used as the SSCI of the uplink application layer service stream corresponding to the downlink application layer service stream; or a mapping table is searched according to the SSCI of the downlink application layer service stream to obtain the SSCI of the uplink application layer service stream corresponding to the downlink application layer service stream, where the mapping table represents a mapping relationship between the SSCI of the downlink application layer service streams and the SSCI of the uplink application layer service streams corresponding to the downlink application layer service streams.

In this embodiment, the SSCI may be carried in a DSCP field of the packet header of the IP packet. An existing DSCP field includes 6 bits, where the last two bits are not used currently. Therefore, the un-used bits may be used to represent whether the DSCP field carries normal DSCP information or SSCI information. For example, for the un-used bits, "W" may be used to represent the information borne by the DSCP field. For example, when W=0, it indicates that the DSCP field bears currently defined DSCP information, and when W=1, it indicates that the DSCP field bears the SSCI of the embodiment of the present invention. In this embodiment, the SSCI may also be carried in an option (Option) field in the packet header of the IP packet, and the SSCI information may be borne by extending an option class or option number (5 bits) of the field. Certainly, SSCI extension may also be performed on another un-used value field of the IP packet.

Step 34: The UE schedules the uplink application layer service stream.

For example, by using step 33, the UE may acquire the SSCI of the uplink application layer service stream to be scheduled, by using step 32, the UE may acquire the mapping relationship between SSCI and service priority information, and according to the SSCI and the mapping relation, the UE may acquire the service priority information of the uplink application layer service stream to be scheduled. Then, the UE may preferentially schedule an uplink application layer service stream with a high service priority.

In this embodiment, scheduling information of an uplink application layer service stream is obtained, and the uplink application layer service stream is scheduled according to the scheduling information, thereby implementing control over the uplink application layer service stream.

In an embodiment, the UE may further respond after receiving the USCI, thereby improving system reliability.

In an embodiment, an existing field in the IP packet carries the SSCI, which avoids the problem of resource waste caused by separately notifying the UE of the application layer service stream information, thereby saving air interface resources.

FIG. 6 is a schematic flowchart of a method according to a third embodiment of the present invention. In this embodiment, the following is used as an example: a broadcast message delivered by a network side device to multiple specific or non-specific UEs carries service priority information. Refer to FIG. 6. This embodiment includes the following steps.

Step 61: A network side device sends a System Information Block (System Information Block, SIB) message to a UE, where the SIB message carries USCI, where the USCI includes scheduling information of an uplink application layer service stream. In this embodiment, the scheduling information may include SSCI, service priority information, and a mapping relationship between the SSCI and the service priority information.

In another embodiment, a mapping relationship between the SSCI and the service priority information is already stored in the UE, and the scheduling information may include stream scheduling control information (Stream Scheduling Control Information, SSCI).

In this embodiment, the scheduling information may further include other service control policies. As the service priority is a service control policy in a sense, in order to show the difference, an expression of "other service control policies" is used to describe other service control policy information except the service priority. Specific functions of the other service control policies may be further defined by an operator according to actual requirements of network device applications.

In one embodiment, for a specific format of the USCI, refer to Table 3 or Table 4.

Step 62: The network side device sends an IP packet to the UE, where a packet header of the IP packet includes SSCI information.

For related description, refer to the description of step 33 in the preceding embodiment.

Step 63: The UE schedules the uplink application layer service stream.

For related description, refer to the description of step 34 in the preceding embodiment.

In this embodiment, scheduling information of an uplink application layer service stream is obtained, and the uplink application layer service stream is scheduled according to the scheduling information, thereby implementing control over the uplink application layer service stream.

In one embodiment, the UE may further respond after receiving the USCI, thereby improving system reliability.

In one embodiment, an existing field in the IP packet carries the SSCI information, which avoids the problem of resource waste caused by separately notifying the UE of the application layer service stream information, thereby saving air interface resources.

By using the embodiment of carrying USCI in a broadcast message, the notification efficiency of the system is improved.

In conclusion, by using the embodiment of the present invention, an UE access layer can acquire service priorities or other service control policies of all application layer service streams on a network side, according to which, the UE access layer is therefore able to perform differentiated scheduling on uplink services, and further performs effective control over application layer services at the access layer. Fairness of radio resource scheduling can be ensured, and certain differentiation is implemented on the basis of fairness. Service availability can be ensured for most users and service experience of high priority services can also be ensured while service experience of low priority services is not declined as much as possible.

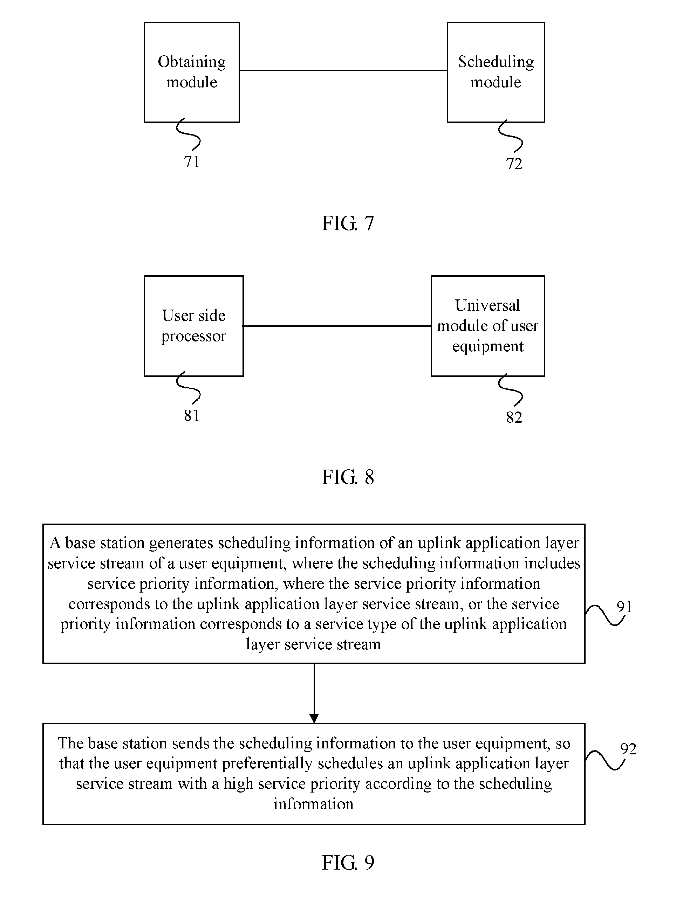

FIG. 7 is a schematic structural diagram of a user side processor according to a fourth embodiment of the present invention, where the user side processor is used to execute the foregoing method on a user equipment side. The processor includes an obtaining module 71 and a scheduling module 72. The obtaining module 71 is configured to obtain scheduling information of an uplink application layer service stream to be scheduled, where the scheduling information includes service priority information, where the service priority information corresponds to the uplink application layer service stream, or the service priority information corresponds to a service type of the uplink application layer service stream; and the scheduling module 72 is configured to preferentially schedule an uplink application layer service stream with a high service priority according to the service priority information obtained by the obtaining module.

In one embodiment, the obtaining module is specifically configured to obtain the scheduling information from received USCI delivered by a network side device.

In one embodiment, the processor may further include a receiving module, configured to receive SSCI, which is sent by the network side device and carried in a packet header of an IP packet, of the uplink application layer service stream to be scheduled.

In one embodiment, the scheduling information obtained by the obtaining module further includes at least one of the following items: application layer service stream identity information and a mapping relationship between the application layer service stream identity and the service priority information; service type identity information of the application layer service stream and a mapping relationship between the service type identity of the application layer service stream and the service priority information; service control policy information and a mapping relationship between the application layer service stream identity and the service control policy information, the application layer service stream identity information and a mapping relationship between the application layer service stream identity and the service priority information, the service control policy information and a mapping relationship between the service type identity of the application layer service stream and the service control policy information, and the service type identity information of the application layer service stream and a mapping relationship between the service type identity of the application layer service stream and the service priority information.

In this embodiment, scheduling information of an uplink service stream is obtained, and the uplink service stream is scheduled according to the scheduling information, thereby implementing control over the uplink application layer service stream.

FIG. 8 is a schematic structural diagram of a user equipment according to a fifth embodiment of the present invention, where the user equipment includes a user side processor 81 and a universal module 82 of the user equipment. The user side processor 81 may be as shown in FIG. 7, and the universal module 82 of the user equipment includes, but is not limited to, the following modules: a user interface module, an input/output port, and a memory.

In this embodiment, the user equipment obtains scheduling information of an uplink service stream, and schedules the uplink service stream according to the scheduling information, thereby implementing control over the uplink application layer service stream.

FIG. 9 is a schematic flowchart of a method according to a sixth embodiment of the present invention. In this embodiment, the following is used as an example: the method is executed on a base station side. The method includes the following steps.

Step 91: A base station generates scheduling information of an uplink application layer service stream of a user equipment, where the scheduling information includes service priority information, where the service priority information corresponds to the uplink application layer service stream, or the service priority information corresponds to a service type of the uplink application layer service stream.

Step 92: The base station sends the scheduling information to the user equipment, so that the user equipment preferentially schedules an uplink application layer service stream with a high service priority according to the scheduling information.

For example, the scheduling information includes SSCI, the service priority information, and a mapping relationship between the SSCI and the service priority information. The scheduling information is carried in USCI and sent by the base station to the user equipment. The USCI may be carried by one or any combination of the following messages: an RRC message, a USCI Notification (Notification) message, a Set USCI message (Set USCI Information), and an SIB message.

In one embodiment, it may be that the base station sends a downlink IP packet to the UE, where a packet header of the downlink IP packet includes SSCI of the uplink application layer service stream that is to be scheduled and of the user equipment. The SSCI may be carried in a DSCP field of the packet header of the IP packet.

In one embodiment, the scheduling information further includes at least one of the following items: application layer service stream identity information and a mapping relationship between the application layer service stream identity and the service priority information; service type identity information of the application layer service stream and a mapping relationship between the service type identity of the application layer service stream and the service priority information; service control policy information and a mapping relationship between the application layer service stream identity and the service control policy information, the application layer service stream identity information and a mapping relationship between the application layer service stream identity and the service priority information, the service control policy information and a mapping relationship between the service type identity of the application layer service stream and the service control policy information, and the service type identity information of the application layer service stream and a mapping relationship between the service type identity of the application layer service stream and the service priority information.

In this embodiment, a UE obtains scheduling information of an uplink service stream, and schedules the uplink application layer service stream according to the scheduling information, thereby implementing control over the uplink application layer service stream.

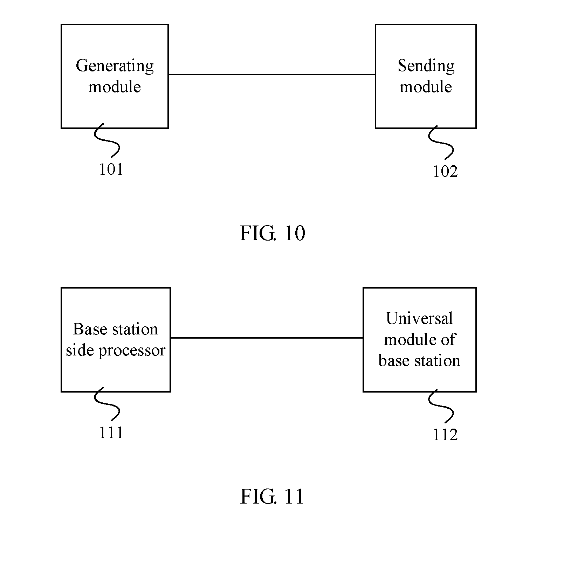

FIG. 10 is a schematic structural diagram of a base station side processor according to a seventh embodiment of the present invention, where the processor is used to execute the foregoing method on a base station side. The processor includes a generating module 101 and a sending module 102. The generating module 101 is configured to generate scheduling information of an uplink application layer service stream of a user equipment, where the scheduling information includes service priority information, where the service priority information corresponds to the uplink application layer service stream, or the service priority information corresponds to a service type of the uplink application layer service stream. The sending module 102 is configured to send the scheduling information to the user equipment, so that the user equipment preferentially schedules an uplink application layer service stream with a high service priority according to the scheduling information.

The scheduling information generated by the generating module 101 includes SSCI, the service priority information, and a mapping relationship between the SSCI and the service priority information.

The sending module is specifically configured to send the scheduling information to the user equipment by using USCI to carry the scheduling information.

The processor may further include an assigning module, configured to carry the SSCI of the uplink application layer service stream that is to be scheduled and of the user equipment in a packet header of an IP packet, where the SSCI is sent to the user equipment.

The sending module is further configured to use one or any combination of the following messages to carry the USCI: an RRC message, a USCI Notification (Notification) message, a Set USCI message (Set USCI Information), and an SIB message.

The scheduling information generated by the generating module further includes at least one of the following items: application layer service stream identity information and a mapping relationship between the application layer service stream identity and the service priority information; service type identity information of the application layer service stream and a mapping relationship between the service type identity of the application layer service stream and the service priority information; service control policy information and a mapping relationship between the application layer service stream identity and the service control policy information, the application layer service stream identity information and a mapping relationship between the application layer service stream identity and the service priority information, the service control policy information and a mapping relationship between the service type identity of the application layer service stream and the service control policy information, and the service type identity information of the application layer service stream and a mapping relationship between the service type identity of the application layer service stream and the service priority information.

In this embodiment, scheduling information is allocated to a UE, so that the UE obtains the scheduling information of an uplink service stream, and schedules the uplink application layer service stream according to the scheduling information, thereby implementing control over the uplink application layer service stream.

FIG. 11 is a schematic structural diagram of a base station according to an eighth embodiment of the present invention, which includes a base station side processor 111 and a universal module 112 of the base station. The base station side processor 111 may be as shown in FIG. 10, and the universal module 112 of the base station includes, but is not limited to, the following modules: an input/output port and a memory.

In this embodiment, scheduling information is allocated to a UE, so that the UE obtains the scheduling information of an uplink service stream, and schedules the uplink application layer service stream according to the scheduling information, thereby implementing control over the uplink application layer service stream.

An embodiment of the present invention further provides a processor, where the processor reads and runs a program, so that method steps on a user equipment side in the foregoing method embodiments are executed.

An embodiment of the present invention further provides a processor, where the processor reads and runs a program, so that method steps on a network side device side in the foregoing method embodiments are executed.

An embodiment of the present invention further provides a user equipment, including a processor, a storage device, a screen, an input/output interface, and some other universal parts of the user equipment. The processor reads and runs a program, so that method steps on a user equipment side in the foregoing method embodiments are executed.

An embodiment of the present invention further provides a network side device, including a processor, a storage device, an input/output interface, a power amplifier, and some other universal parts of the network side device. The processor reads and runs a program, so that method steps on a network side device side in the foregoing method embodiments are executed.

An embodiment of the present invention further provides a communications system, which includes a user equipment and a network side device in the foregoing embodiments.

It is understandable that, related features of the foregoing methods and devices may be cross-referenced. In addition, the "first" and "second" in the foregoing embodiments are used to distinguish the embodiments, and do not represent superiority or inferiority of the embodiments.

Persons of ordinary skill in the art may understand that, all or a part of the steps of the foregoing method embodiments may be implemented by a program instructing relevant hardware. The program may be stored in a computer readable storage medium. When the program runs, the steps of the foregoing method embodiments are performed. The storage medium includes: any medium that can store program codes, such as an ROM, an RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A method for controlling an uplink application layer service, comprising:
obtaining, by a user equipment, scheduling information of an uplink application layer service stream to be scheduled, wherein the scheduling information comprises service priority information, wherein the service priority information corresponds to the uplink application layer service stream, or the service priority information corresponds to a service type of the uplink application layer service stream, and
preferentially scheduling, by the user equipment, an uplink application layer service stream with a high service priority according to the service priority information.

2. The method according to claim 1, wherein the scheduling information is carried in uplink control information USCI delivered by a network side device to the user equipment.

3. The method according to claim 2, wherein the scheduling information comprises stream scheduling control information SSCI, the service priority information, and a mapping relationship between the SSCI and the service priority information.

4. The method according to claim 3, wherein the SSCI is used to identify the service type of the application layer service stream.

5. The method according to any one of claims 3 to 4, wherein the service priority information is a stream scheduling weight SSW, or an uplink scheduling priority USP.

6. The method according to any one of claims 3 to 5, further comprising: obtaining, by the user equipment, the SSCI of the uplink application layer service stream to be scheduled, wherein the SSCI information of the uplink application layer service stream to be scheduled is carried in a packet header of an IP packet received by the user equipment.

7. The method according to claim 6, wherein the SSCI information is carried in a differentiated services code point DSCP field of the packet header of the IP packet.

8. The method according to any one of claims 2 to 7, wherein the USCI is carried by one or any combination of the following messages: a radio resource control RRC message, a USCI Notification message, a Set USCI Information message, and a system information block SIB message.

9. The method according to any one of claims 1 to 8, wherein the scheduling information further comprisesapplication layer service stream identity information, and a mapping relationship between the application layer service stream identity and the service priority information.

10. The method according to any one of claims 1 to 8, wherein the scheduling information further comprises service type identity information of the application layer service stream, and a mapping relationship between the service type identity of the application layer service stream and the service priority information.

11. The method according to claim 9, wherein the scheduling information further comprisesservice control policy information, and a mapping relationship between the application layer service stream identity and the service control policy information.

12. The method according to claim 10, wherein the scheduling information further comprises service control policy information, and a mapping relationship between the service type identity of the application layer service stream and the service control policy information.

13. The method according to any one of claims 1 to 12, wherein the uplink application layer service stream comprises an uplink application layer IP packet.

14. The method according to any one of claims 1 to 13, wherein the step of preferentially scheduling an uplink application layer service stream with a high service priority is controlled by an access layer.

15. A user side processor, comprising:
an obtaining module, configured to obtain scheduling information of an uplink application layer service stream to be scheduled, wherein the scheduling information comprises service priority information, wherein the service priority information corresponds to the uplink application layer service stream, or the service priority information corresponds to a service type of the uplink application layer service stream; and
a scheduling module, configured to preferentially schedule an uplink application layer service stream with a high service priority according to the service priority information obtained by the obtaining module.

16. The processor according to claim 15, wherein the obtaining module is specifically configured to obtain the scheduling information from received uplink control information USCI delivered by a network side device.

17. The processor according to claim 15 or 16, further comprising:
a receiving module, configured to receive stream scheduling control information SSCI, which is sent by a network side device and carried in a packet header of an IP packet, of the uplink application layer service stream to be scheduled.

18. The processor according to any one of claims 15 to 17, wherein the scheduling information obtained by the obtaining module further comprises at least one of the following items: application layer service stream identity information and a mapping relationship between the application layer service stream identity and the service priority information; service type identity information of the application layer service stream and a mapping relationship between the service type identity of the application layer service stream and the service priority information; service control policy information, a mapping relationship between the application layer service stream identity and the service control policy information, the application layer service stream identity information, and a mapping relationship between the application layer service stream identity and the service priority information; the service control policy information, a mapping relationship between the service type identity of the application layer service stream and the service control policy information, the service type identity information of the application layer service stream, and a mapping relationship between the service type identity of the application layer service stream and the service priority information.

19. A user equipment, comprising:
the user side processor according to any one of claims 15 to 18, and
at least one of the following modules: a user interface module, an input/output port, and a memory.

20. A method for controlling an uplink application layer service, comprising:
generating, by a base station, scheduling information of an uplink application layer service stream of a user equipment, wherein the scheduling information comprises service priority information, wherein the service priority information corresponds to the uplink application layer service stream, or the service priority information corresponds to a service type of the uplink application layer service stream; and
sending, by the base station, the scheduling information to the user equipment, so that the user equipment preferentially schedules an uplink application layer service stream with a high service priority according to the scheduling information.

21. The method according to claim 20, wherein the scheduling information comprises stream scheduling control information SSCI, the service priority information, and a mapping relationship between the SSCI and the service priority information.

22. The method according to claim 20 or 21, wherein the scheduling information is carried in uplink control information USCI and is sent to the user equipment.

23. The method according to any one of claims 20 to 22, further comprising: carrying the SSCI of the uplink application layer service stream that is to be scheduled and of the user equipment in a packet header of an IP packet and sending the SSCI to the user equipment.

24. The method according to claim 23, wherein the SSCI is carried in a differentiated services code point DSCP field of the packet header of the IP packet.

25. The method according to claim 22, wherein the USCI is carried by one or any combination of the following messages: a radio resource control RRC message, a USCI Notification message, a Set USCI Information message, and a system information block SIB message.

26. The method according to any one of claims 20 to 25, wherein the scheduling information further comprises at least one of the following items: application layer service stream identity information and a mapping relationship between the application layer service stream identity and the service priority information; service type identity information of the application layer service stream and a mapping relationship between the service type identity of the application layer service stream and the service priority information; service control policy information and a mapping relationship between the application layer service stream identity and the service control policy information, the application layer service stream identity information and a mapping relationship between the application layer service stream identity and the service priority information, the service control policy information and a mapping relationship between the service type identity of the application layer service stream and the service control policy information, and the service type identity information of the application layer service stream and a mapping relationship between the service type identity of the application layer service stream and the service priority information.

27. A base station side processor, comprising:
a generating module, configured to generate scheduling information of an uplink application layer service stream of a user equipment, wherein the scheduling information comprises service priority information, wherein the service priority information corresponds to the uplink application layer service stream, or the service priority information corresponds to a service type of the uplink application layer service stream; and
a sending module, configured to send the scheduling information to the user equipment, so that the user equipment preferentially schedules an uplink application layer service stream with a high service priority according to the scheduling information.

28. The processor according to claim 27, wherein the scheduling information generated by the generating module comprises stream scheduling control information SSCI, the service priority information, and a mapping relationship between the SSCI and the service priority information.

29. The processor according to claim 27 or 28, wherein the sending module is specifically configured to send the scheduling information to the user equipment by using uplink control information USCI to carry the scheduling information.

30. The processor according to any one of claims 27 to 29, further comprising:
an assigning module, configured to carry the SSCI of the uplink application layer service stream that is to be scheduled and of the user equipment in a packet header of an IP packet, wherein the SSCI is sent to the user equipment.

31. The processor according to claim 29, wherein the sending module is further configured to use one or any combination of the following messages to carry the USCI: a radio resource control RRC message, a USCI Notification message, a Set USCI Information message, and a system information block SIB message.

32. The processor according to any one of claims 27 to 31, wherein the scheduling information generated by the generating module further comprises at least one of the following items: application layer service stream identity information and a mapping relationship between the application layer service stream identity and the service priority information; service type identity information of the application layer service stream and a mapping relationship between the service type identity of the application layer service stream and the service priority information; service control policy information and a mapping relationship between the application layer service stream identity and the service control policy information, the application layer service stream identity information and a mapping relationship between the application layer service stream identity and the service priority information, the service control policy information and a mapping relationship between the service type identity of the application layer service stream and the service control policy information, and the service type identity information of the application layer service stream and a mapping relation between the service type identity of the application layer service stream and the service priority information.

33. A base station, comprising:
the base station side processor according to any one of claims 27 to 32, and
at least one of the following modules: an input/output port and a memory.

34. A processor, used in a user equipment, wherein the processor reads and runs a program, so that method steps on a user equipment side in the method according to any one of claims 1 to 14 are executed.

35. A processor, used in a network side device, wherein the processor reads and runs a program, so that method steps on a network side device side in the method according to any one of claims 20 to 26 are executed.

36. A user equipment, comprising the processor according to claim 34, a storage device, a screen, and an input/output interface, wherein the processor reads and runs a program, so that method steps on a user equipment side in the method according to any one of claims 1 to 14 are executed.

37. A network side device, comprising a processor, a storage device, an input/output interface, and a power amplifier, wherein the processor reads and runs a program, so that method steps on a network side device side in the method according to any one of claims 20 to 26 are executed.

38. A communications system, comprising the user equipment according to claim 36 and the network side device according to claim 37.
